# DEMANDE DE BREVET EUROPEEN

(11) **EP 1 493 617 A2**
(43) Date de publication de la demande: **05.01.2005**
(21) Numéro de dépôt: 04364047.3
(22) Date de dépôt: 05.07.2004
(51) Int. Cl.: B60N 2/28

(54) **Siège auto pour enfant comprenant des moyens pour tendre une sangle de ceinture de sécurité.**

(30) Priorité: 04.07.2003 FR 0308233
(71) Demandeur: AMPAFRANCE, 49309 Cholet (FR)
(72) Inventeur: Biaud, Richard, 49340 Trementines (FR)
(74) Mandataire: Bioret, Ludovic

(57) **Abrégé**

L'invention a pour objet un siège auto pour enfant, destiné à être fixé à un siège d'un véhicule à l'aide d'au moins une sangle de ceinture de sécurité et comprenant des moyens d'augmentation de la tension de ladite sangle, caractérisé en ce qu'il comprend au moins une pièce mobile (1) présentant une surface d'appui (11) pour ladite sangle et des moyens d'actionnement (2) agissant sur ladite pièce mobile (1) de façon à la déplacer entre une position de relâchement et une position de mise en tension, dans laquelle le parcours de ladite sangle, et donc sa tension, est augmenté, lesdits moyens d'actionnement et ladite pièce mobile (1) étant montés l'un par rapport à l'autre de façon que lesdits moyens d'actionnement (2) subissent, dans ladite position de mise en tension, une force exercée par ladite pièce mobile (1) qui tend à s'opposer au retour desdits moyens d'actionnement (2) dans ladite position de relâchement.

## Description

Le domaine de l'invention est celui de la puériculture. Plus précisément, l'invention concerne les sièges pour enfant, destinés à être installés dans un véhicule et à être maintenus dans celui-ci à l'aide d'une ceinture de sécurité du véhicule, et en particulier la fixation de tels sièges dans le véhicule.

On connaît déjà de nombreux types de sièges auto, conçus pour être maintenus à l'aide des ceintures de sécurité du véhicule.

Classiquement, on fixe les sièges enfants en procédant de la manière suivante :
- on tire la ceinture de sécurité du véhicule et on passe la boucle de celle-ci entre le siège et sa structure support (ou son embase) en vue de récupérer la boucle de l'autre côté du siège ;
- on attache la boucle de la ceinture de sécurité ;
- on tire sur la sangle en vue de tendre celle-ci le plus possible, en cherchant à ré-enrouler au fur et à mesure l'excédent de sangle ;
- on rabat sur la sangle une patte de maintien prévue sur la structure support du siège pour maintenir la sangle fixement sur la structure support du siège.
Ces manipulations sont souvent peu aisées. En particulier, la phase d'installation consistant à tenter de tendre la sangle est à la fois pénible et délicate. Or, le fait de tendre la sangle de la ceinture de sécurité est essentiel pour assurer le maintien efficace du siège plaqué contre le dossier du siège arrière du véhicule, ceci en particulier en cas de choc.

Certaines personnes n'arrivent pas à tendre cette sangle de façon adéquate.

Pourtant, si cette sangle n'est pas tendue, ou pas suffisamment, le siège enfant peut, en cas de choc, être projeté vers l'avant, jusqu'à ce que la sangle se tende et qu'elle soit alors dans les conditions permettant au dérouleur de la sangle de détecter une situation de choc et de bloquer le déroulement de la sangle.

En outre, le siège va se déplacer de façon plus ou moins importante, dans les virages ou en cas de coup de frein, ce qui nuit au confort et à la sécurité de l'enfant.

On comprend donc que le fait de ne pas tendre suffisamment la sangle peut entraîner des conséquences plus ou moins importantes.

Ceci étant, on constate dans la pratique que la phase consistant à tendre la sangle est souvent plus ou moins bien réalisée, la sangle pouvant dans certains cas présenter un relâchement permettant au siège de basculer vers l'avant en cas de choc du véhicule.

En outre, certains utilisateurs peuvent ne pas se rendre compte de l'utilité et de l'importance de cette opération, et par voie de conséquence omettre d'effectuer celle-ci, ou la réaliser de façon insuffisante.

Une solution a été proposée par l'art antérieur pour faciliter la mise en oeuvre de la sangle de la ceinture de sécurité, consistant à prévoir un élément de serrage et un actionneur permettant de déplacer l'élément de serrage ainsi que des moyens de verrouillage de l'actionneur en position active.

Selon cette solution, le montage de l'élément de serrage et de son actionneur est tel que, en position active, la force exercée par l'élément de serrage (lui-même sous l'action de la force exercée par la sangle) tend à faire quitter l'actionneur de sa position active. C'est pourquoi il est nécessaire de prévoir des moyens de verrouillage.

Cette solution antérieure apparaît donc complexe et relativement peu fiable. En outre, elle met en oeuvre un nombre de pièces mécaniques important, ce qui rend son montage long à réaliser.

De plus, ce dispositif augmente le nombre des manipulations nécessaire à l'installation et à la désinstallation du siège, ce qui est une contrainte au niveau de l'utilisateur.

D'autres techniques, également complexes et peu pratiques, proposent de définir un chemin particulier pour la sangle, et des moyens de modification de ce chemin. Cette solution suppose également un nombre élevé de pièces, et n'offre pas une mise en oeuvre facile et ergonomique.

L'invention a notamment pour objectif de pallier les inconvénients de l'art antérieur.

Plus précisément, l'invention a pour objectif de proposer un siège auto pour enfant destiné à être fixé dans un véhicule à l'aide d'une sangle de ceinture de sécurité qui permette d'obtenir aisément une tension correcte et efficace de cette sangle, de façon notamment à assurer la sécurité de l'enfant.

Un autre objectif de l'invention est de fournir un tel siège, dont la mise en oeuvre est facile, fiable et contrôlable.

L'invention a également pour objectif de fournir un tel siège enfant qui permette d'être installé/désinstallé rapidement et aisément par l'utilisateur, sans manipulation complexe, ni guidage de la sangle dans des éléments particuliers définissant un chemin de sangle.

L'invention a aussi pour objectif de fournir un tel siège qui soit simple de conception, facile à mettre en oeuvre et à monter.

Ces objectifs, ainsi que d'autres qui apparaîtront plus clairement par la suite, sont atteints selon l'invention à l'aide d'un siège auto pour enfant, destiné à être fixé à un siège d'un véhicule à l'aide d'au moins une sangle de ceinture de sécurité et comprenant des moyens d'augmentation de la tension de ladite sangle, comprenant au moins une pièce mobile présentant au moins une surface d'appui et/ou de guidage pour ladite sangle et des moyens d'actionnement agissant sur chacune desdites au moins une pièce mobile de façon à la déplacer entre une position de relâchement et une position de mise en tension, dans laquelle le parcours de ladite sangle, et donc sa tension, sont augmentés, lesdits moyens d'actionnement et ladite pièce mobile étant montés l'un par rapport à l'autre de façon que lesdits moyens d'actionnement forment également moyens de verrouillage de ladite position de mise en tension, en exploitant une force exercée par ladite sangle sur ladite pièce mobile pour s'opposer au retour desdits moyens d'actionnement dans ladite position de relâchement.

On obtient ainsi un système très simple, sans qu'il soit nécessaire de prévoir des moyens spécifiques de guidage de part et d'autre de la ou des parties mobiles, ni de moyens de verrouillage de celles-ci.

Selon un premier mode de mise en oeuvre avantageux, lesdits moyens d'actionnement comprennent un élément monté pivotant sur ledit siège.

Préférentiellement, ladite pièce mobile est montée pivotante et présente une surface de glissement sur laquelle lesdits moyens d'actionnement sont susceptibles de se déplacer.

Dans ce cas, l'axe de rotation de ladite partie mobile est avantageusement monté sensiblement au milieu de la hauteur du dossier dudit siège.

On obtient ainsi une bonne démultiplication et une bonne efficacité du système.

Avantageusement, ladite partie mobile et un élément desdits moyens d'actionnement forment un mécanisme par came et excentrique.

Cette approche est à la fois simple et efficace.

De façon préférentielle, lesdits moyens d'actionnement comprennent des moyens de commande déportés.

Les manipulations sont alors aisées, et permettent une démultiplication des efforts.

Selon un mode de réalisation particulier, lesdits moyens de commande comprennent un levier pivotant. Ledit levier pivotant peut notamment être relié auxdits moyens d'actionnement par une tringle.

Avantageusement, lesdits moyens de commande comprennent un élément de préhension permettant de démultiplier l'effort appliqué sur ladite pièce mobile.

Dans ce cas, ladite poignée de préhension peut avantageusement se trouver au moins en partie dissimulée dans ledit siège et/ou son embase dans la position de mise en tension.

Préférentiellement, ladite surface d'appui est bordée de deux rebords de façon à former un passage pour ladite sangle.

Selon un mode de réalisation avantageusement comprend deux pièces mobiles similaires, montées de chaque côté dudit siège.

Selon un second mode de mise en oeuvre de l'invention, ladite pièce mobile est montée sur un chariot coulissant à l'intérieur dudit siège.

Avantageusement, ledit chariot coulisse sensiblement horizontalement par rapport à l'assise dudit siège, et présente au moins un prolongement s'étendant sensiblement verticalement et portant la ou lesdites surfaces d'appui.

Lesdites surfaces d'appui sont préférentiellement inclinées d'environ 45° par rapport audit prolongement.

De façon avantageuse, ledit chariot coulissant porte deux surfaces d'appui similaires et actionnées simultanément.

Préférentiellement, ledit chariot est actionné à l'aide d'une poignée, par l'intermédiaire d'au moins une biellette. Ladite poignée peut par exemple s'étendre à l'avant dudit siège.

Selon encore un autre mode de mise en oeuvre avantageux, ladite pièce mobile définit un chemin pour ladite sangle sur au moins une portion de la largeur dudit siège.

Dans ce cas, ledit chemin définit avantageusement une chicane s'écartant vers l'arrière dudit siège.

Selon un mode de réalisation particulier de l'invention, le siège auto comprend des moyens pour éloigner ladite sangle de l'arrière dudit siège.

Ce mode de réalisation est notamment avantageux pour un siège pivotant, entre :
- une position de transport, face à la route ; et
- au moins une position d'installation de l'enfant, décalée d'environ 90° par rapport à ladite position de transport.

Cela permet d'éviter que la sangle perturbe la rotation du siège.

De façon avantageuse, lesdits moyens pour éloigner ladite sangle sont formés et/ou montés sur une partie sensiblement verticale d'une embase dudit siège.

Ladite partie sensiblement verticale de l'embase peut notamment définir une fenêtre entre deux montants Lesdits moyens pour éloigner ladite sangle peuvent alors comprendre un prolongement sensiblement vertical de réception et/ou de guidage de ladite sangle.

Selon un mode de réalisation particulier, lesdits moyens pour éloigner ladite sangle comprennent des moyens mobiles de tension de sangle complémentaires.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins annexés parmi lesquels :
- la figure 1 illustre de façon schématique un dispositif de mise en tension d'une sangle, destiné à équiper un siège enfant selon l'invention ;
- la figure 2 illustre les positions respectives de la surface de glissement de la pièce mobile et de la partie de moyens d'actionnement en contact avec cette surface de glissement ;
- les figures 3A et 3B illustrent un autre mode de réalisation de l'invention, mettant en oeuvre un chariot coulissant, dans la position de relâchement, respectivement en vue de dessus et en vue de dessous ;
- les figures 4A et 4B illustrent le système des figures 3A et 3B, dans la position de mise en tension, respectivement en vue de dessus et en vue de dessous ;
- les figures 5A et 5B présentent, en coupe, le fonctionnement du système des figures 3A à 4B, respectivement dans les positions de relâchement et de mise en tension ;
- la figure 6 illustre un autre type de siège auto, pivotant et monté sur une embase ;
- la figure 7 présente l'embase du siège auto de la figure 6.

Tel que déjà indiqué précédemment, le principe de l'invention est de prévoir un montage de moyens d'actionnement par rapport à une (ou plusieurs) pièce(s) mobile(s) permettant la mise en tension de la sangle grâce auquel les moyens d'actionnement et la pièce mobile interagissent lorsqu'ils sont en position active, les moyens d'actionnement soutenant la pièce mobile tandis que la pièce mobile maintient les moyens d'actionnement en position active.

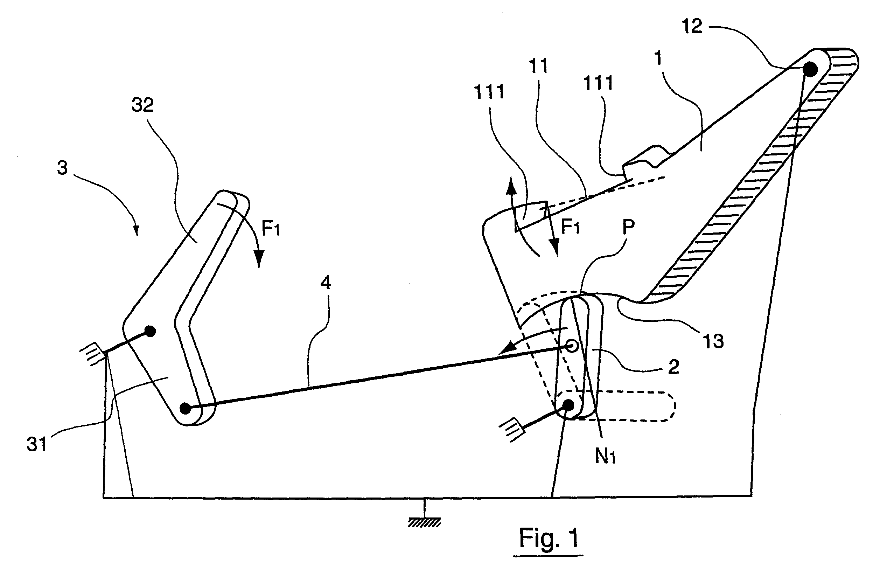

La figure 1 présente un premier mode de réalisation d'un siège auto pour enfant selon l'invention, destiné à être fixé au siège d'un véhicule à l'aide d'une sangle d'une ceinture de sécurité, ce siège comprenant des moyens pour tendre ladite sangle ou augmenter sa tension.

Selon le présent mode de réalisation de l'invention, ces moyens pour tendre la sangle de la ceinture comprennent :
- une pièce mobile 1, ou came, présentant une surface d'appui 11 pour la sangle, cette pièce 1 étant montée libre à rotation autour d'un axe 12 porté par une partie fixe du siège ;
- une biellette 2 formant moyen d'actionnement de la pièce mobile, susceptible d'être déplacée entre une position de relâchement à une position de mise en tension de la sangle, cette biellette étant montée pivotante autour d'un axe porté par une partie fixe du siège.

Une telle pièce mobile 1 peut être avantageusement prévue de chaque côté du siège ou être prévue en position centrale selon un autre mode de réalisation envisageable. Selon les cas, les deux pièces peuvent être actionnées, ou seulement l'une d'entre elles.

Tel que cela apparaît sur la figure 1, la biellette 2 entraîne la rotation de la pièce 1 en glissant sur une surface de glissement 13 que présente la pièce mobile 1.

Le siège comprend en outre des moyens de commande 3 distants de la biellette 2 et reliés à celle-ci par l'intermédiaire d'une tringle 4 de façon que les moyens de commande 3 soient accessibles à partir de l'avant du siège.

Ces moyens de commande 3 sont en l'occurrence constitués par une pièce en V montée pivotante autour d'un axe porté par une partie fixe du siège, cette pièce présentant :
- un levier pivotant 31 relié à la biellette 2 par la tringle 4 ;
- une poignée 32 prévue pour être actionnée de l'avant vers l'arrière du siège pour obtenir la mise en tension de la sangle.

Selon l'invention, le montage de la pièce mobile 1 et de la biellette 2 implique un positionnement relatif de telle sorte que la biellette subisse, dans la position de mise en tension (illustrée en traits pointillés), une force exercée par la pièce mobile qui tend à interdire le retour de la biellette 2 dans sa position de relâchement (illustrée en traits mixtes).

La pièce mobile 1 et la biellette 2 forment ainsi un mécanisme à came et excentrique. L'axe de rotation 12 de la pièce mobile 1 est placé sur le siège de sorte que la biellette 2 passe par une position intermédiaire, entre la position de relâchement et la position de mise en tension, dans laquelle la force F1 exercée par la sangle est dirigée selon la normale N1 à la surface de glissement et passant par le point P (point de contact entre la biellette 2 de la pièce 1).

Une telle position intermédiaire correspond au passage d'un point dur dû fait que la force F1 se transmet, dans cette position, intégralement à l'encontre de l'action sur le levier pivotant 3 exercé par l'utilisateur.

Une telle position constitue aussi une situation d'équilibre instable où la force F1 s'aligne sur la normale N1 en P, situation à partir de laquelle la biellette 2 et l'élément mobile 1 peuvent basculer soit vers une position de mise en tension soit vers une position de relâchement.

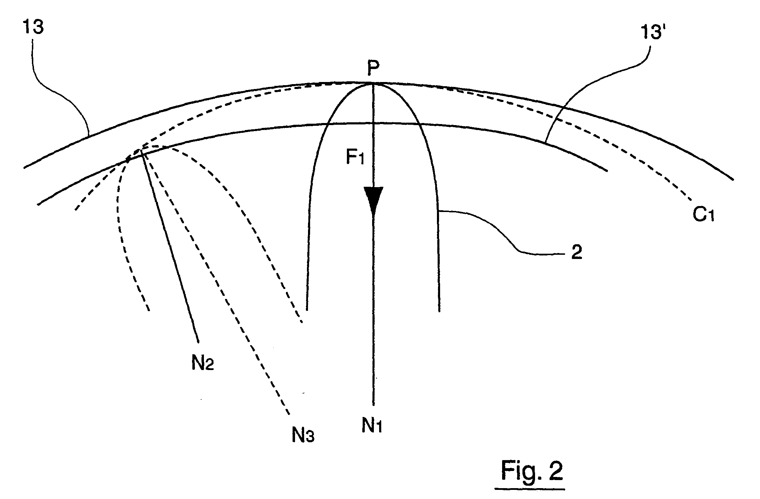

Ceci est illustré par la figure 2 qui fait apparaître la biellette 2 décrivant une trajectoire circulaire C1, au contact de la surface de glissement 13 de la pièce mobile 1.

Après avoir passé la position intermédiaire (dans laquelle la biellette apparaît en traits pleins), la biellette 2 occupe par exemple une position telle que celle illustrée en traits pointillés. Dans cette situation, l'ensemble est directement verrouillé en position de mise en tension, sans moyens de verrouillage complémentaire.

Par ailleurs, tel que cela apparaît clairement sur la figure 1, le dispositif est prévu de sorte que la mise en tension est obtenue par la cinématique suivante : lorsque la poignée 32 est rabattue tel qu'indiqué par la flèche F1, la biellette 2 est entraînée par l'intermédiaire du levier 31 et de la tringle 4 d'une position de relâchement (en traits mixtes sur la figure 1) vers une position de mise en tension (en traits pointillés sur la figure 1), ce qui provoque le déplacement vers le haut de la pièce mobile 1.

On obtient ainsi un système simple et aisé à manipuler, du fait de la démultiplication, due notamment à la tringle et à la position de l'axe de rotation de la pièce mobile.

En outre, il est visuellement facile à contrôler, puisqu'il faut que le (ou les) levier(s) soi(en)t ramené(s) dans le plan de l'embase. On peut de plus prévoir sur la pièce mobile une couleur spécifique (par exemple rouge) ou un message, visible uniquement lorsque la pièce mobile est dans la position de mise en tension.

On note que, pour éviter que la sangle ne se dégage de la surface d'appui 11 pendant sa mise en tension, on peut prévoir des rebords 111 qui assurent le maintien de la sangle latéralement sur la surface d'appui 11.

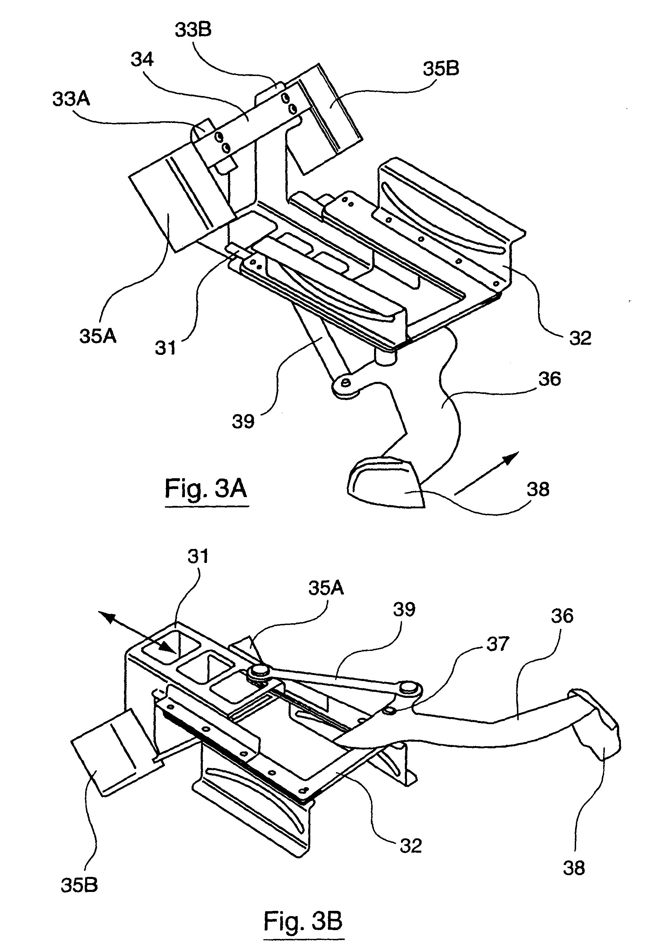

Selon un autre mode de réalisation de l'invention, on peut prévoir que le système de mise en tension comprend deux surfaces d'appui réparties de chaque côté du siège (ou une surface d'appui s'étendant sur toute ou une grande partie de la largeur du siège) actionnées simultanément par une même commande. Un exemple de mise en oeuvre de cette approche est illustré par les figures 3A à 5B.

Selon ce mode de réalisation, on prévoit un chariot coulissant 31 par rapport à une pièce fixe 32, solidaire du siège et plus précisément de son assise ou de son embase.

Les figures 3A à 4B présentent respectivement :
- figure 3A : le système en position de relâchement vu de dessus ;
- figure 3B : le système en position de relâchement vu de dessous ;

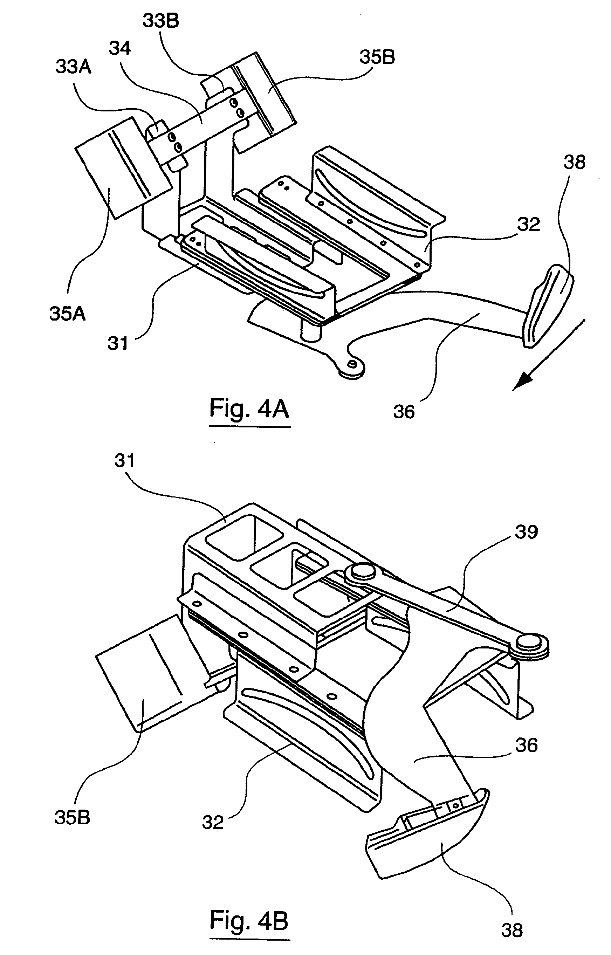

- figure 4A : le système en position de mise en tension vu de dessus ;
- figure 4B : le système en position de mise en tension vu de dessous.

On se référera indifféremment à l'une ou l'autre des figures, en fonction des besoins.

Le chariot 31 présente deux prolongements 33A et 33B qui s'étendent sensiblement perpendiculairement au déplacement du chariot. Ils portent à leur extrémité libre un support 34, incliné sensiblement à 45°, et qui reçoit à ses extrémités (c'est-à-dire sensiblement de chaque côté du siège) deux blocs 35A et 35B qui recevront les sangles et assureront leur pré-tensionnement. L'actionnement du chariot 31 est commandé par une poignée 36, montée pivotante par rapport à un axe de rotation 37 solidaire de la partie fixe 32.

Cette poignée se termine par un élément de préhension 38, accessible en face avant du siège, sensiblement sous l'assise de ce dernier.

La poignée est reliée au chariot 31 par l'intermédiaire d'une biellette 39.

La biellette 39 et la poignée 36 sont conçues de façon que dans la position de mise en tension (voir figure 4B), l'ensemble se trouve immobilisé, ou verrouillé, sans l'intervention d'éléments complémentaires.

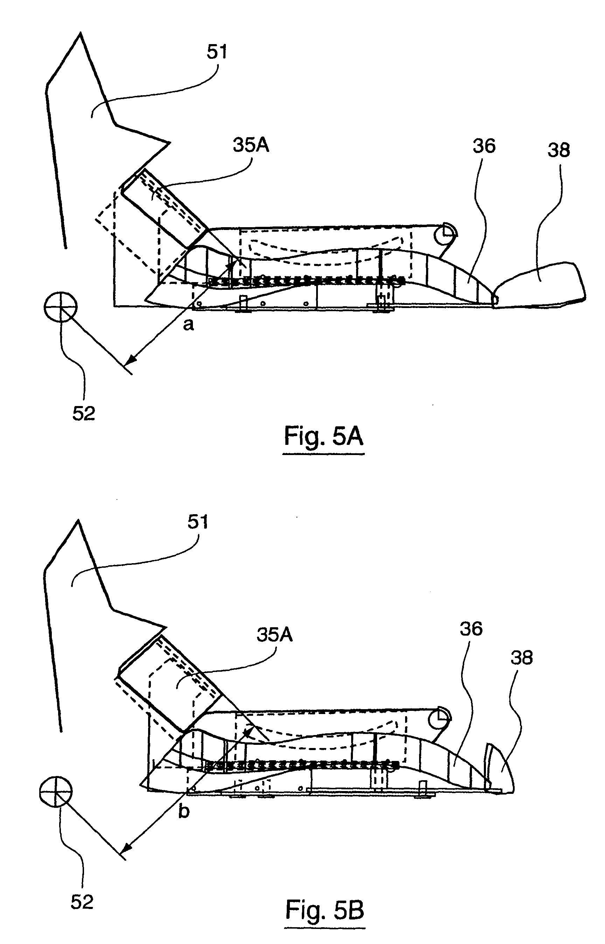

Comme on le voit sur les figures 5A et 5B, qui présentent respectivement, en coupe, le système qui vient d'être décrit, respectivement dans la position de relâchement et dans la position de mise en tension, le passage de la poignée 36 en position de mise en tension entraîne un coulissement vers l'avant du siège du chariot 31, entraînant également un rapprochement des éléments de mise en tension 35A et 35B. Ceux-ci sont donc décalés vers le haut par rapport au dossier 51.

On obtient donc un allongement de la distance entre la surface de ces éléments et un point fixe de fixation d'une sangle 52 (B > A).

Selon une variante, les deux éléments d'appui 35A et 35B pourraient être remplacés par un ensemble unique de réception de sangle, qui pourrait s'étendre sur une grande partie de la largeur du siège, et le cas échéant configurer un chemin de circulation de la sangle, formant par exemple une chicane.

On notera par ailleurs que d'autres types de mécanisme et de cinématique peuvent être mis en oeuvre pour obtenir un résultat similaire.

Dans tous les cas, on obtient un système particulièrement simple et efficace, ne nécessitant pas d'élément de guidage fixe des sangles, et simplifiant en conséquence de façon importante le montage. De même, il n'est pas nécessaire de prévoir un verrouillage spécifique en position de mise en tension. Cette fonction est assurée directement par les moyens commandant le passage de la position de relâchement à la position de mise en tension et réciproquement.

Selon un autre mode de mise en oeuvre de l'invention, adapté notamment aux sièges montés pivotant sur une embase, on prévoit en outre des moyens fixes pour écarter la sangle du siège, pour qu'elle ne s'oppose pas au mouvement du siège, ni ne le perturbe.

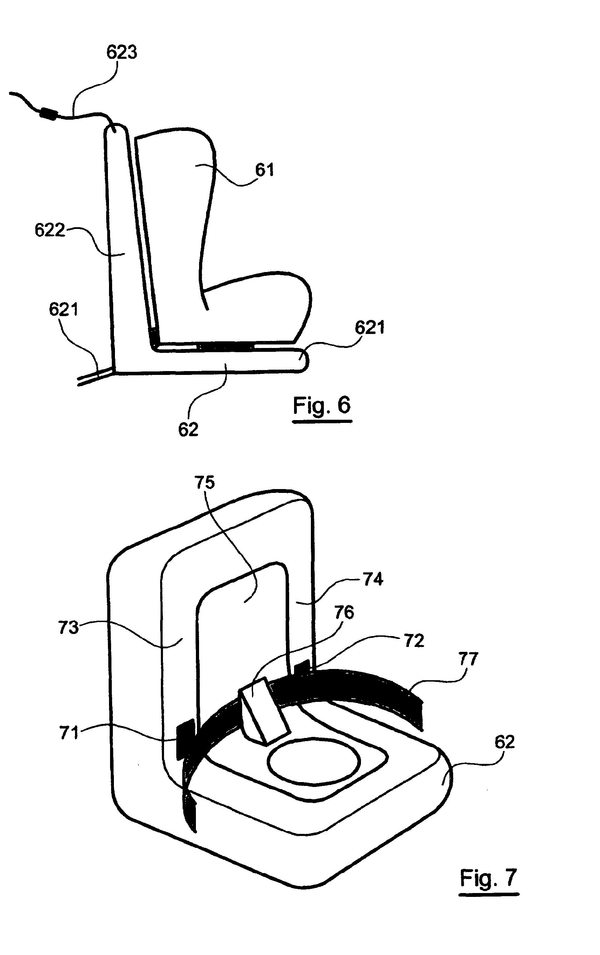

La figure 6 illustre schématiquement un tel siège pivotant. Le siège 61 est monté sur une embase 62, de façon qu'il puisse pivoter (63) d'une position de transport, face à la route, vers une position d'installation de l'enfant, décalée d'environ 90°. Dans le mode de réalisation illustré, l'embase 62 présente une partie 621 sensiblement horizontale de support et une partie 622 sensiblement verticale d'appui contre le dossier du siège du véhicule.

L'embase peut être solidarisée au véhicule par deux pinces 641 de type Isofix, et par une fixation complémentaire 643 en partie supérieure.

La figure 7 illustre l'embase portant les éléments de mise en tension de la sangle, selon l'invention.

De même que pour les modes de réalisation décrits précédemment, deux cames mobiles 71, 72 sont prévues, pour recevoir et tendre la sangle. Le mécanisme d'actionnement peut être similaire à celui décrit précédemment, en relation avec les figures 1 et 2.

On prévoit un outre des moyens pour définir un chemin de sangle entre les deux cames mobiles. Les éléments définissant ce chemin de sangle peuvent être fixes ou mobiles.

Ainsi, dans un mode de réalisation, la partie verticale 622 comprenant deux montants 73, 74 définissant une fenêtre centrale 75. Une extension 76 s'étend vers le haut à l'intérieur de cette fenêtre 75, pour guider la sangle 77, et la dégager de la zone dans laquelle se déplace le siège.

Cette extension 76 présente une forme adaptée pour recevoir et maintenir la sangle. L'utilisateur guide la sangle 77 à l'intérieur de la fenêtre 75, pour la mettre en place le long de l'extension 76.

Selon une variante de l'invention, cette extension 76 peut être mobile, ou être équipée d'une came mobile supplémentaire, pour participer à la fonction de prétensionneur. Dans ce cas, lorsque les cames 71, 72 déjà commentées plus haut sont actionnées pour tendre la sangle, la came complémentaire se déplace dans le sens opposé.

Avantageusement, les trois cames sont solidarisées, de façon qu'un dispositif d'actionnement unique pilote le déplacement de ces cames pour tendre la sangle.

## Revendications

1. Siège auto pour enfant, destiné à être fixé à un siège d'un véhicule à l'aide d'au moins une sangle de ceinture de sécurité et comprenant des moyens d'augmentation de la tension de ladite sangle,
**caractérisé en ce qu'**il comprend au moins une pièce mobile (1) présentant au moins une surface d'appui et/ou de guidage (11) pour ladite sangle et des moyens d'actionnement (2) agissant sur chacune desdites au moins une pièce mobile (1) de façon à la déplacer entre une position de relâchement et une position de mise en tension, dans laquelle le parcours de ladite sangle, et donc sa tension, sont augmentés,
lesdits moyens d'actionnement et ladite pièce mobile (1) étant montés l'un par rapport à l'autre de façon que lesdits moyens d'actionnement (2) forment également moyens de verrouillage de ladite position de mise en tension, en exploitant une force exercée par ladite sangle sur ladite pièce mobile (1) pour s'opposer au retour desdits moyens d'actionnement (2) dans ladite position de relâchement.

2. Siège auto pour enfant selon la revendication 1, **caractérisé en ce que** lesdits moyens d'actionnement comprennent un élément (2) monté pivotant sur ledit siège.

3. Siège auto pour enfant selon les revendications 1 et 2, **caractérisé en ce que** ladite pièce mobile (1) est montée pivotante et présente une surface de glissement (13) sur laquelle lesdits moyens d'actionnement (2) sont susceptibles de se déplacer.

4. Siège auto pour enfant selon la revendication 3, **caractérisé en ce que** l'axe de rotation (12) de ladite partie mobile (1) est monté sensiblement au milieu de la hauteur du dossier dudit siège.

5. Siège auto pour enfant selon l'une quelconque des revendications 3 et 4, **caractérisé en ce que** ladite partie mobile (1) et un élément (2) desdits moyens d'actionnement forment un mécanisme par came et excentrique.

6. Siège auto pour enfant selon l'une quelconque des revendications 1 à 5, **caractérisé en ce que** lesdits moyens d'actionnement (2) comprennent des moyens de commande déportés (3).

7. Siège auto pour enfant selon la revendication 6, **caractérisé en ce que** lesdits moyens de commande (3) comprennent un levier pivotant (31).

8. Siège auto pour enfant selon la revendication 7, **caractérisé en ce que** ledit levier pivotant (31) est relié auxdits moyens d'actionnement (2) par une tringle (4).

9. Siège auto pour enfant selon l'une quelconque des revendications 6 à 8, **caractérisé en ce que** lesdits moyens de commande (3) comprennent un élément de préhension (32) permettant de démultiplier l'effort appliqué sur ladite pièce mobile.

10. Siège auto pour enfant selon la revendication 9, **caractérisé en ce que** ladite poignée de préhension se trouve au moins en partie dissimulée dans ledit siège et/ou son embase dans la position de mise en tension.

11. Siège auto pour enfant selon l'une quelconque des revendications 1 à 10, **caractérisé en ce que** ladite surface (11) d'appui est bordée de deux rebords (111) de façon à former un passage pour ladite sangle.

12. Siège auto pour enfant selon l'une des revendications 1 à 11, **caractérisé en ce qu'**il comprend deux pièces mobiles (1) similaires, montées de chaque côté dudit siège.

13. Siège auto pour enfant selon la revendication 1, **caractérisé en ce que** ladite pièce mobile est montée sur un chariot coulissant à l'intérieur dudit siège.

14. Siège auto pour enfant selon la revendication 13, **caractérisé en ce que** ledit chariot coulisse sensiblement horizontalement par rapport à l'assise dudit siège, et présente au moins un prolongement s'étendant sensiblement verticalement et portant la ou lesdites surfaces d'appui.

15. Siège auto pour enfant selon la revendication 14, **caractérisé en ce que** la ou lesdites surfaces d'appui sont inclinées d'environ 45° par rapport audit prolongement.

16. Siège auto pour enfant selon l'une quelconque des revendications 14 à 15, **caractérisé en ce que** ledit chariot coulissant porte deux surfaces d'appui similaires et actionnées simultanément.

17. Siège auto pour enfant selon l'une quelconque des revendications 14 à 16, **caractérisé en ce que** ledit chariot est actionné à l'aide d'une poignée, par l'intermédiaire d'au moins une biellette.

18. Siège auto pour enfant selon la revendication 17, **caractérisé en ce que** ladite poignée s'étend à l'avant dudit siège.

19. Siège auto pour enfant selon la revendication 1, **caractérisé en ce que** ladite pièce mobile définit un chemin pour ladite sangle sur au moins une portion de la largeur dudit siège.

20. Siège auto selon la revendication 19, **caractérisé en ce que** ledit chemin définit une chicane s'écartant vers l'arrière dudit siège.

21. Siège auto selon l'une quelconque des revendications 1 à 19, **caractérisé en ce qu'**il comprend des moyens pour éloigner ladite sangle de l'arrière dudit siège.

22. Siège auto selon la revendication 21, **caractérisé en ce que** ledit siège est pivotant, entre :
- une position de transport, face à la route ; et
- au moins une position d'installation de l'enfant, décalée d'environ 90° par rapport à ladite position de transport.

23. Siège auto selon l'une quelconque des revendications 21 et 22, **caractérisé en ce que** lesdits moyens pour éloigner ladite sangle sont formés et/ou montés sur une partie sensiblement verticale d'une embase dudit siège.

24. Siège auto selon la revendication 23, **caractérisé en ce que** ladite partie sensiblement verticale de l'embase définit une fenêtre entre deux montants, et **en ce que** lesdits moyens pour éloigner ladite sangle comprennent un prolongement sensiblement vertical de réception et/ou de guidage de ladite sangle.

25. Siège auto selon l'une quelconque des revendications 21 à 24, **caractérisé en ce que** lesdits moyens pour éloigner ladite sangle comprennent des moyens mobiles de tension de sangle complémentaires.
